# EUROPEAN PATENT APPLICATION

(11) **EP 4 841 945 A1**
(43) Date of publication of application: **18.11.2026**
(21) Application number: 26175173.9
(22) Date of filing: 28.04.2026
(51) Int. Cl.: H04L 12/28, G06N 3/02, G06N 3/08, G06N 3/044, G06N 3/045, G06N 3/084, G06N 5/01, G06N 5/025, G06N 7/01, G06N 20/00, G06N 20/20, H05B 45/00, H05B 47/12, H05B 47/19, H05B 47/105, H05B 47/175

(54) **A METHOD FOR TRAINING A LIGHTING CONTROL MACHINE LEARNING MODEL**

(30) Priority: 12.05.2025 EP 25175605
(71) Applicant: Signify Holding B.V., 5656 AE Eindhoven (NL)
(72) Inventor: MOONEN, Jan, Renier, 5656AE Eindhoven (NL)
(74) Representative: Signify IP

(57) **Abstract**

A method for training a lighting control machine learning model for deployment in a lighting system operating in an environment. The method comprising the steps of deploying a multi-control machine learning model in the environment, said multi-control machine learning model configured to generate control outputs based on a natural language input, each of said control outputs for controlling the lighting system and/or a non-lighting system, determining whether the output generated by the multi-control machine learning model comprises a control output for controlling the lighting system, creating a training dataset only comprising the control outputs for which it has been determined that the control output generated by the multi-control machine learning model comprises a control output for controlling the lighting system, wherein the training dataset comprises the natural language inputs and the corresponding generated control outputs for controlling the lighting system, and training the lighting control machine learning model with the created training dataset, said lighting control machine learning model configured to only generate control outputs for controlling the lighting system.

## Description

### FIELD OF THE INVENTION

The invention relates to a method for training a lighting control machine learning model. The invention further relates to a controler and computer program for training a lighting control machine learning model.

### BACKGROUND OF THE INVENTION

The application of conversational user interfaces (UIs) has become increasingly prevalent in various industries, including smart home automation and loT devices. These UIs rely on large language models (LLMs) to process and respond to user inputs. However, the complexity and size of these LLMs can lead to long response times and high operating costs. As the demand for more efficient and responsive conversational UIs grows, there is a need to address these challenges to enhance user experience and operational efficiency.

### SUMMARY OF THE INVENTION

Large models are trained on extensive datasets, enabling them to handle a wide range of queries and provide comprehensive responses. However, the complexity of large models can lead to slower processing times, resulting in delays between user input and system response. Large models require significant computational power and memory, which can be challenging for devices with limited resources, such as smart home systems and IoT devices. This can negatively impact the user experience. There is a need to provide a more efficient and cost-effective lighting control that can deliver fast and accurate responses while minimizing resource consumption.

According to a first aspect, this objective is achieved by a method for training a lighting control machine learning model for deployment in a lighting system operating in an environment. The method comprises, in a first phase, deploying a multi-control machine learning model in the environment, said multi-control machine learning model configured to generate control outputs based on a natural language input, each of said control outputs for controlling the lighting system and/or a non-lighting system. These control outputs are instructions or commands that the model generates to control various systems within the environment. The control output may be a control output for controlling the lighting system such as "turn on the lights" or setting a lighting scene based on the natural language input. The control output may pertain to other non-lighting systens in the environment. Examples include controlling smart home devices like thermostats, security systems, or entertainment systems. Natural language inputs such as "set the thermostat to 22 degrees" or "play music in the living room" are processed by the model to generate control outputs that manage these non-lighting systems. Some control outputs may simultaneously relate to the control of both lighting and non-lighting systems to create a specific atmosphere or environment. For instance, a user might request a "cozy atmosphere," which could involve dimming the lights, adjusting the color temperature to a warm hue, and setting the HVAC system to a comfortable temperature. The method further comprises determining whether the output generated by the multi-control machine learning model comprises a control output for controlling the lighting system. That is, after the multi-control machine learning model generates a control output based on a natural language input, the method evaluates whether this output is intended for controlling the lighting system. The method comprises creating a training dataset only comprising the control outputs for which it has been determined that the control output generated by the multi-control machine learning model comprises a control output for controlling the lighting system. The training dataset comprises the natural language inputs and the corresponding generated control outputs for controlling the lighting system. The method further comprises training the lighting control machine learning model with the created training dataset, said lighting control machine learning model configured to only generate control outputs for controlling the lighting system.

By capturing successful user interactions with an initially deployed multi-control model, a rich and relevant training dataset is created. This dataset reflects real-world usage and user preferences, which is crucial for training the smaller lighting specific model.

The method may further comprise deploying the lighting control machine learning in the environment. This step involves integrating the trained model into the actual lighting system within the user's environment.

The training dataset may further comprise metadata associated with the natural language inputs and the corresponding generated control outputs, the metadata comprising one or more of: a timestamp indicative of the timing that the natural language inputs were received and/or the corresponding control outputs were generated, a location within the environment, an identifier of a user that provided the natural language inputs, a type of the generated control output. That is, each pair of natural language input and the corresponding generated control output for controlling the lighting system may be assosiated with metadata. Metadata provides additional context that helps the lighting-control model understand the circumstances under which commands are given and executed. This leads to more accurate and context-aware responses.

The lighting system may be configured to provide an acknowledgement that a lighting control command has been executed. In that case, the step of determining whether the output generated by the multi-control machine learning model comprises a control output for the lighting system is based on the acknowledgement. By relying on acknowledgements, the system ensures that only valid and executed commands are considered for training, enhancing the accuracy of the training dataset.

The method may comprise determining that the output generated by the multi-control machine learning model comprises a control output for the lighting system if the output complies with predetermined specifications indicative of a lighting control command.

The step of determining whether the output generated by the multi-control machine learning model comprises a control output for the lighting system may be based on analyzing the natural language input to determine whether it is indicative of a lighting control command.

The method may further comprise determining whether the control output for controlling the lighting system is a valid control output and creating the training dataset based only on the valid control outputs. A training dataset composed of valid control outputs enhances the model's ability to generate precise and effective lighting control commands.

The method may comprise determining that the control output for controlling the lighting system is not a valid control output by determining a modification to the lighting system within a predetermined time period from the execution of the control output generated by the multi-control machine learning model. A modification to the lighting system may be indicative of a dissatisfaction of the user with the control output.

The lighting system may be associated with a user interface that allows users to provide feedback on the generated control outputs and the step of determining whether the control output for controlling the lighting system is a valid control output may be based on the provided feedback.

The lighting control machine learning model may be configured to have a smaller number of parameters and/or smaller computational complexity than the multi-control machine learning model. Using a large model for initial training ensures comprehensive and accurate data collection, while deploying a smaller model for lighting control enhances efficiency, reduces computational costs, and provides faster, more personalized responses.

According to a second aspect, the object is achieved by a method of controlling a lighting system operating in an environment based on a lighting control machine learning model, the method comprising:
- receiving a natural language input, said input for controlling the lighting system;
- generating, using the lighting control machine learning model, a control output for the lighting system based on the natural language input, wherein the lighting control machine learning model has been trained on a training dataset from a multi-control machine learning model that has been previously deployed in the environment, said multi-control machine learning model configured to generate control outputs based on a natural language input, each of said control outputs for controlling the lighting system and/or a non-lighting system, and wherein the training dataset comprises only the control outputs for which it has been determined that the control output generated by the multi-control machine learning model comprises a control output for controlling the lighting system.

The method according to the second aspect may further comprise determining whether the lighting control machine learning model is able to provide a control output based on the natural language input and if it is determined that the lighting control machine learning model is not able to provide a control output based on the natural language input, the method comprises generating the control output for controlling the lighting actuation system using the multi-control machine learning model. That is, only if the lighting specific model concluded that it cannot handle the request, the originally deployed large model is used.

According to a third aspect, the object is achieved by a controller for enabling control of a lighting system operating in an environment via a lighting control machine learning model, the controller configured to use a deployed multi-control machine learning model in the environment, said multi-control machine learning model configured to generate control outputs based on a natural language input, each of said control outputs for controlling the lighting system and/or a non-lighting system, determine whether the output generated by the multi-control machine learning model comprises a control output for controlling the lighting system, create a training dataset only comprising the control outputs for which it has been determined that the control output generated by the multi-control machine learning model comprises a control output for controlling the lighting system, wherein the training dataset comprises the natural language inputs and the corresponding generated control outputs for controlling the lighting system, and train the lighting control machine learning model with the created training dataset, said lighting control machine learning model configured to only generate control outputs for controlling the lighting system.

According to a fourth aspect, the object is achieved by a controller for controlling lighting system operating in an environment via a lighting control machine learning model, the controller configured to receive a natural language input, said input for controlling the lighting system, and generate, using the lighting control machine learning model, a control output for the lighting system based on the natural language input, wherein the lighting control machine learning model has been trained on a training dataset from a multi-control machine learning model that has been previously deployed in the environment, said multi-control machine learning model configured to generate control outputs based on a natural language input, each of said control outputs for controlling the lighting system and/or a non-lighting system, and wherein the training dataset comprises only the control outputs for which it has been determined that the control output generated by the multi-control machine learning model comprises a control output for controlling the lighting system.

According to a fifth aspect, the object is achieved by a computer program product for a computing device, the computer program product comprising computer program code to perform the method of the first and/or the second aspect when the computer program product is run on a processing unit of the computing device.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

The above, as well as additional objects, features and advantages of the disclosed systems, devices and methods will be better understood through the following illustrative and non-limiting detailed description of embodiments of devices and methods, with reference to the appended drawings, in which:
Fig. 1 shows schematically an example of a controller for enabling control of a lighting system in an environment;
Fig. 2 shows schematically a method for enabling control of a lighting system via a lighting control machine learning model;
Fig. 3 shows schematically a method for controlling lighting system via a lighting control machine learning model;
Fig. 4 shows schematically a method of for controlling lighting system via a lighting control machine learning model.

All the figures are schematic, not necessarily to scale, and generally only show parts which are necessary in order to elucidate the invention, wherein other parts may be omitted or merely suggested.

### DETAILED DESCRIPTION

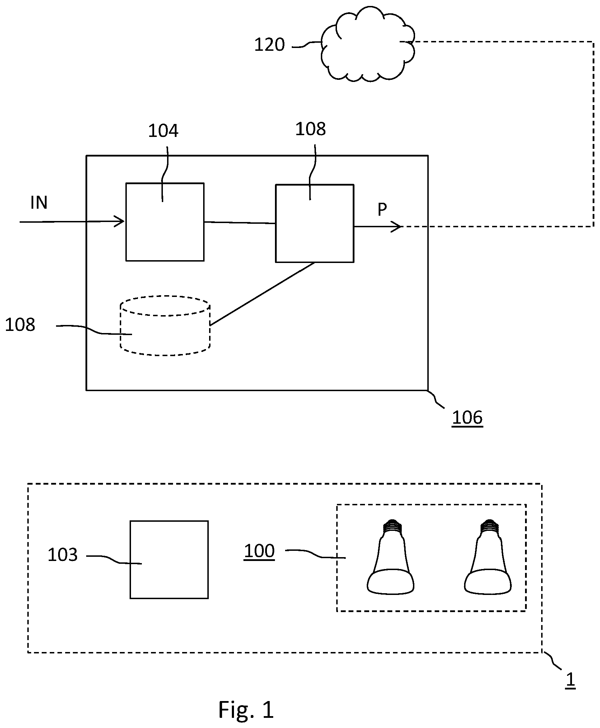

Fig. 1 shows an example of a controller 106 for enabling the control of a lighting system 100 operating in an environment 1, such as a living room, an apartment, a hospital, etc. via a lighting control machine learning model. Environment 1 comprises the lighting system 100 and a non-lighting system 103. For example, the non-lighting system 103 may be a security system, an HVAC system, an entertainment system, etc. operating in the same environment as the lighting system 100.

The controller 106 is configured to, in an initial deployment phase, use a multi-control machine learning model already deployed in the environment to generate control outputs based on a natural language input IN provided by a user. The user input can for instance be in the form of a text or an audio file and serves as a starting point for the generation of control signals for controlling operation of the lighting system and/or the non-lighting system.

The multi-control machine learning model may be operating locally e.g., in memory 108 of the controller 106 or may be operating in the cloud 120. The controller 106 is configured to receive, via a communication interface 102, the natural language input IN and generate a corresponding control output using the multi-control machine learning model. For example, the controller 106 may comprise a prompt generation unit 108 that is configured to receive the natural language input and to generate a prompt P for the multi-control machine learning model based on the natural language input. The prompt generation unit 108 is configured to provide said prompt to the multi-control machine learning model. The prompt P comprises at least the natural language input. The prompt P may further comprise device data indcative of operating capabilities of devices of the lighting system and/or the non-lighting system, environmental data indicative of a spatial configuration of the environment 1 where the lighting system is located, contextual data indicatve of an activity in the environment. The multi-control machine learning model generates a control output for controlling the lighting system 100 and/or the non-lighting system 103. For example, a user may request a "cozy atmpsphere" and the multi-control machine learning model generates an output for controlling the lighting system 100 according to a "relax" light scene and the HVAC system 103 to increase the temperature. In another example, a user may request a "relaxing atmpsphere" and the multi-control machine learning model generates an output only for controlling the lighting system 100.

The controller 106 is further configured to determine whether the output generated by the multi-control machine learning model comprises a control output for controlling the lighting system 100.

In an embodiment, the lighting system 100 may be configured to provide an acknowledgement signal to the controller 106 once a lighting control command has been successfully executed. This acknowledgement serves as confirmation that the command has been carried out as intended. When a natural language input is processed by the multi-control model, it generates a control output for the lighting system. After the lighting system executes the command, it sends an acknowledgement back to the controller. The controller 106 uses this acknowledgement to validate that the control output was indeed for controlling the lighting system.

In a further embodiment, controller 106 is configured to determine whether the control output generated by the multi-control model complies with predetermined specifications indicative of a lighting control command and if so, determine that the output generated by the multi-control machine learning model comprises a control output for the lighting system. These specifications may include various parameters such as:
- **Action Type:** The type of action (e.g., turn on, turn off, adjust brightness, change colour temperature).
- **Lighting Attributes:** Specific attributes related to lighting control (e.g., brightness level, colour temperature, lighting scene).

In another embodiment, the controller 106 may analyse the natural language input to determine whether it is indicative of a lighting control command. This analysis involves processing the input to understand its intent and context. For example, the controller 106 may analyze the natural language input to identify specific keywords or phrases within the natural language input that are indicative of lighting control commands. For example, words like "turn on," "dim," "brightness," "color," and "lights" are strong indicators of lighting-related commands. Beyond keywords, the controller 106 may use contextual understanding to determine the intent behind the input. This involves analyzing the structure and semantics of the input to accurately interpret the user's request.

The controller 106 is further configured to create a training dataset only comprising the control outputs for which it has been determined that the control output generated by the multi-control machine learning model comprises a control output for controlling the lighting system. The training dataset comprises pairs of natural language inputs and their corresponding lighting control outputs (generated by the multi-control model). For example,
- **Natural Language Input:** "Turn on the living room lights."
- **Corresponding Lighting Control Output:** "action": "turn_on", "location": "living_room", "brightness": 100}
In this example, the user requests to turn on the lights in the living room. The multi-control model generates a control output that specifies the action (turn on), the location (living room), and the brightness level (100%).
- **Natural Language Input:** "Create a cozy atmosphere in the living room."
- **Corresponding Lighting Control Output:** {"action": "set_scene", "location": "living_room", "scene": "cozy"}
In this example, the user requests to create a cozy atmosphere in the living room. The multi-control model generates a control output that includes the action (set scene), the location (living room), and the scene type (cozy). Additionally, the multi-control model also generated control outputs for the HVAC system to adjust the temperature and airflow to complement the cozy atmosphere. However, for the training dataset, only the lighting control output is used.

The training dataset may further comprise metadata associated with the pairs of natural language inputs and the corresponding generated control outputs. The metadata may comprise one or more of:
1. **Timestamp:** This metadata indicates the timing when the natural language inputs were received and/or when the corresponding control outputs were generated.
2. **Location within the Environment:** This metadata specifies the location within the environment where the natural language input was provided or where the control output is intended to be applied. For instance, it can indicate whether the command was given in the living room, bedroom, or kitchen. This helps in tailoring the model to understand location-specific preferences and optimize control outputs accordingly.
3. **User Identifier:** This metadata identifies the user who provided the natural language input. By associating inputs and outputs with specific users, the model can learn individual user preferences and provide personalized responses. This is particularly useful in environments with multiple users, ensuring that the system adapts to each user's unique needs.
4. **Type of Generated Control Output:** This metadata categorizes the type of control output generated by the model. For example, it can distinguish between outputs related to control commands such as turning lights on/off, adjusting brightness, changing colour temperature, or setting specific lighting scenes.

After the training dataset has been created, it is then used to train the lighting control machine learning model. Training a model using a curated data set is well known in the art of machine learning and will not be discussed in detail in the context of this application. Typically, the process involves selecting a suitable machine learning algorithm to train the model. Common algorithms for training language models include supervised learning techniques such as gradient descent, backpropagation, and reinforcement learning. The model undergoes multiple iterations of training, where it learns to map natural language inputs to the corresponding control outputs. During each iteration, the model's parameters are adjusted to minimize the error between the predicted outputs and the actual outputs in the training dataset. Throughout the training process, the model's performance is validated using a separate validation dataset. This helps in monitoring the model's accuracy and preventing overfitting. Metrics such as accuracy, precision, recall, and F1 score can be used to evaluate the model's performance. These metrics help in assessing how well the model is learning and predicting control outputs. Once the model is trained and validated, it is deployed in the environment for the control of the lighting system. This involves connecting the model to lighting devices, switches, and other devices of the lighting system 100. The model is configured to interact with the lighting system, ensuring it can receive and process natural language inputs from users and generate appropriate lighting control outputs. The lighting control model may undergo periodic retraining with updated datasets to adapt to changing user preferences and environmental conditions.

Preferably, the lighting control machine learning model is configured to have a smaller number of parameters and/or smaller computational complexity than the multi-control machine learning model. The initial use of the large model ensures that the smaller model is trained with high-quality, relevant data, leading to better performance and user experience once deployed. Configuring the lighting control machine learning model with a smaller number of parameters and reduced computational complexity ensures that it is highly efficient, cost-effective, and suitable for deployment in resource-constrained environments. For example, the multi-control model might require advanced hardware to operate efficiently, whereas the lighting control model can run on simpler, less powerful devices, making it ideal for smart home applications, e.g., to operate on the edge or on the device, etc. Additionally, lower computational complexity translates to reduced energy consumption.

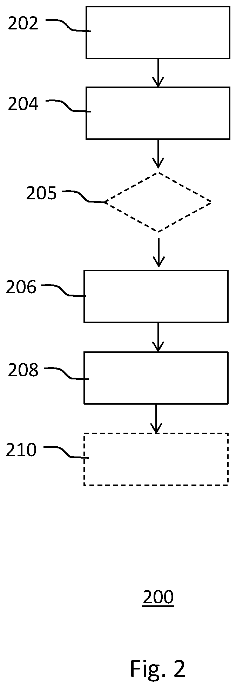

Fig. 2 shows an example of a method 200 for training a lighting control machine learning model for deployment in a lighting system 100 operating in an environment 1. The method 200 comprises the steps of, in an initial phase, deploying or using 202 a multi-control machine learning model in the environment, said multi-control machine learning model configured to generate control outputs based on a natural language input, each of said control outputs for controlling the lighting system and/or a non-lighting system. The method further comprises determining 204 whether the output generated by the multi-control machine learning model comprises a control output for controlling the lighting system. The method further comprises creating 206 a training dataset only comprising the control outputs for which it has been determined that the control output generated by the multi-control machine learning model comprises a control output for controlling the lighting system. The training dataset comprises (pairs of) the natural language inputs and the corresponding generated control outputs for controlling the lighting system. The method further comprises, in step 208, training the lighting control machine learning model with the created training dataset, said lighting control machine learning model configured to only generate control outputs for controlling the lighting system. The method 200, may further comprise, in a model deployment phase, deploying 210 the lighting control model in the environment for using it to control the lighting system.

The method 200 may further comprise determining whether the control output for controlling the lighting system is a valid control output and creating the training dataset based only on the valid control outputs. That is, method 200 may comprise optional step 205 where the controller 106 determines the validity of the control output for the lighting system.

For example, this may involve monitoring the lighting system for any modifications within a predetermined time period after the control output is executed. This could involve changes in brightness, color temperature, or lighting scenes. The predetermined time period can be set based on typical user behavior patterns or specific requirements of the environment. If a modification to the lighting system is detected within the predetermined time period, it indicates that the user was not satisfied with the initial control output. The user may have manually adjusted the lighting to achieve the desired effect, suggesting that the initial command was ineffective or incorrect. The detection of a modification implies that the initial control output did not meet the user's expectations or requirements, thus being considered invalid. For example, if the control output was to "set the bedroom lights to 50% brightness" and the user changes the brightness level shortly after, the controller 106 determines that the initial control output was invalid.

In another example, the lighting system 100 may be associated with a user interface that enables users to provide feedback on the control outputs generated by the multi-control machine learning model. This interface can be a mobile app, a web portal, or a physical control panel with feedback options. Users can rate the effectiveness of the control outputs, provide comments, or select predefined feedback options (e.g., "satisfactory," "unsatisfactory," "needs adjustment"). The controller 106 analyzes the feedback provided by users to determine the validity of the control outputs. Positive feedback indicates that the control output was effective and met the user's expectations. Negative feedback or requests for adjustments suggest that the control output was not valid. The controller 106 uses this feedback to identify and exclude ineffective commands from the training dataset.

Only control outputs that are determined valid are included in the training dataset. Any control output deemed invalid, e.g., due to subsequent modifications or negative feedback, are excluded.

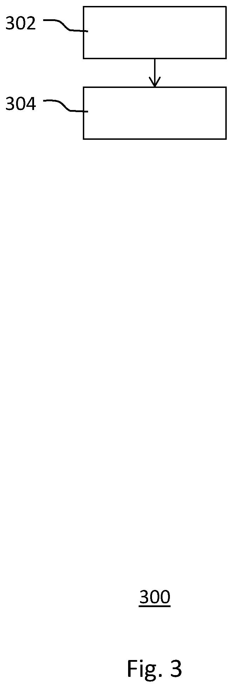

Fig. 3 shows an example of a method 300 for controlling a lighting system 100 operating in an environment 1 via a lighting control machine learning model. The method comprises receiving 302 a natural language input, said input for controlling the lighting system and generating 304, using the lighting control machine learning model, a control output for the lighting system based on the natural language input. The lighting control machine learning model has been pre-trained on a training dataset from a multi-control machine learning model that has been previously deployed in the environment, said multi-control machine learning model configured to generate control outputs based on a natural language input, each of said control outputs for controlling the lighting system and/or a non-lighting system, and wherein the training dataset comprises only the control outputs for which it has been determined that the control output generated by the multi-control machine learning model comprises a control output for controlling the lighting system.

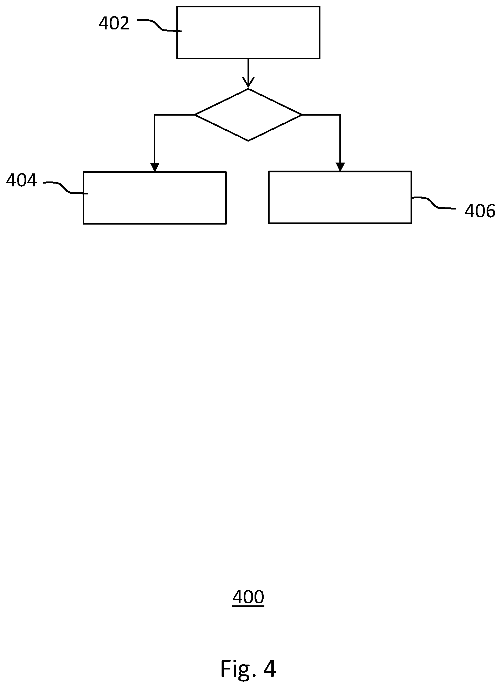

Fig. 4 shows another example of a method 400 for controlling a lighting system 100 operating in an environment 1 via a lighting control machine learning model. The method comprises receiving 402 a natural language input, said input for controlling the lighting system. The method 400 comprises determining whether the lighting control machine learning model is able to provide a control output based on the natural language input. If it is determined that the lighting control machine learning model is not able to provide a control output based on the natural language input, the method comprises generating 404 the control output for controlling the lighting actuation system using the multi-control machine learning model. That is, the method comprises prompting the (typically larger) multi-control model to generate a control output. Else, if it is determined that the lighting control machine learning model is able to provide a control output based on the natural language input, the method comprises generating 406 the control output for controlling the lighting actuation system using the lighting control machine learning model.

The methods 200, 300 and 400 may be executed by computer program code of a computer program product when the computer program product is run on a processing unit of a computing device, such as the controller 106.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **302** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope and spirit of the present invention. The embodiments were chosen and described to best explain the principles and some practical applications of the present invention, and to enable others of ordinary skill in the art to understand the present invention for various embodiments with various modifications as are suited to the particular use contemplated.

## Claims

1. A method (200) for training a lighting control machine learning model for deployment in a lighting system (100) operating in an environment (1), the method comprising the steps of:
- deploying (202) a multi-control machine learning model in the environment, said multi-control machine learning model configured to generate control outputs based on a natural language input, each of said control outputs for controlling the lighting system (100) and/or a non-lighting system (103);
- determining (204) whether the output generated by the multi-control machine learning model comprises a control output for controlling the lighting system;
- creating (206) a training dataset only comprising the control outputs for which it has been determined that the control output generated by the multi-control machine learning model comprises a control output for controlling the lighting system, wherein the training dataset comprises the natural language inputs and the corresponding generated control outputs for controlling the lighting system;
- training (208) the lighting control machine learning model with the created training dataset, said lighting control machine learning model configured to only generate control outputs for controlling the lighting system.

2. The method of claim 1, wherein the method comprises deploying the lighting control machine learning in the environment for controlling the lighting system.

3. The method of any preceding claim wherein the training dataset comprises metadata associated with the natural language inputs and the corresponding generated control outputs, the metadata comprising one or more of: a timestamp indicative of the timing that the natural language inputs were received and/or the corresponding control outputs were generated, a location within the environment, an identifier of a user that provided the natural language inputs, a type of the generated control output.

4. The method of any preceding claim, wherein the lighting system is configured to provide an acknowledgement that a lighting control command has been executed and wherein the step of determining whether the output generated by the multi-control machine learning model comprises a control output for the lighting system is based on the acknowledgement.

5. The method of any preceding claim, wherein the method comprises determining that the output generated by the multi-control machine learning model comprises a control output for the lighting system if the output complies with predetermined specifications indicative of a lighting control command.

6. The method of any preceding claim, wherein the step of determining whether the output generated by the multi-control machine learning model comprises a control output for the lighting system is based on analyzing the natural language input to determine whether it is indicative of a lighting control command.

7. The method of any preceding claim, wherein the method further comprises:
- determining whether the control output for controlling the lighting system is a valid control output;
- creating the training dataset based only on the valid control outputs.

8. The method of claim 7, wherein the method comprises determining that the control output for controlling the lighting system is not a valid control output by determining a modification to the lighting system within a predetermined time period from the execution of the control output generated by the multi-control machine learning model.

9. The method of claim 7, wherein the lighting system is associated with a user interface that allows users to provide feedback on the generated control outputs and wherein the step of determining whether the control output for controlling the lighting system is a valid control output is based on the provided feedback.

10. The method of any preceding claim wherein the lighting control machine learning model is configured to have a smaller number of parameters and/or smaller computational complexity than the multi-control machine learning model.

11. A method of controlling a lighting system operating in an environment based on a lighting control machine learning model, the method comprising:
- receiving a natural language input, said input for controlling the lighting system;
- generating, using the lighting control machine learning model, a control output for the lighting system based on the natural language input, wherein the lighting control machine learning model has been trained on a training dataset from a multi-control machine learning model that has been previously deployed in the environment, said multi-control machine learning model configured to generate control outputs based on a natural language input, each of said control outputs for controlling the lighting system and/or a non-lighting system, and wherein the training dataset comprises only the control outputs for which it has been determined that the control output generated by the multi-control machine learning model comprises a control output for controlling the lighting system.

12. The method of claim 11, wherein the method comprises, if it is determined that the lighting control machine learning model is not able to provide a control output based on the natural language input,
- generating the control output for controlling the lighting actuation system using the multi-control machine learning model.

13. A controller (106) for enabling control of a lighting system operating in an environment via a lighting control machine learning model, the controller configured to:
- use a deployed multi-control machine learning model in the environment, said multi-control machine learning model configured to generate control outputs based on a natural language input, each of said control outputs for controlling the lighting system and/or a non-lighting system;
- determine whether the output generated by the multi-control machine learning model comprises a control output for controlling the lighting system;
- create a training dataset only comprising the control outputs for which it has been determined that the control output generated by the multi-control machine learning model comprises a control output for controlling the lighting system, wherein the training dataset comprises the natural language inputs and the corresponding generated control outputs for controlling the lighting system;
- train the lighting control machine learning model with the created training dataset, said lighting control machine learning model configured to only generate control outputs for controlling the lighting system.

14. A controller for controlling lighting system operating in an environment via a lighting control machine learning model, the controller configured to:
- receive a natural language input, said input for controlling the lighting system;
- generate, using the lighting control machine learning model, a control output for the lighting system based on the natural language input, wherein the lighting control machine learning model has been trained on a training dataset from a multi-control machine learning model that has been previously deployed in the environment, said multi-control machine learning model configured to generate control outputs based on a natural language input, each of said control outputs for controlling the lighting system and/or a non-lighting system, and wherein the training dataset comprises only the control outputs for which it has been determined that the control output generated by the multi-control machine learning model comprises a control output for controlling the lighting system.

15. A computer program product for a computing device, the computer program product comprising computer program code to perform the method of any of claims 1-12 when the computer program product is run on a processing unit of the computing device.
